# DEMANDE DE BREVET EUROPEEN

(11) **EP 1 308 381 A1**
(43) Date de publication de la demande: **07.05.2003**
(21) Numéro de dépôt: 02356218.4
(22) Date de dépôt: 30.10.2002
(51) Int. Cl.: B62K 9/00, A63G 13/10

(54) **Jouet formant siège à bascule ou pousseur sur roues et procédé d'adaptation d'un tel jouet**

(30) Priorité: 31.10.2001 FR 0114168
(71) Demandeur: SMOBY, F-39170 Lavans les Saint Claude (FR)
(72) Inventeur: Faivre, Jean-Pierre, 39100 Parcey (FR)
(74) Mandataire: Myon, Gérard

(57) **Abrégé**

Ce jouet (1) comprend un corps (2) formant siège et équipé de roues (21) et un repose-pieds (4) apte à être monté sous le corps (2) dans deux positions telles que :
- dans une première position, le repose-pieds (4) maintient les roues (21) du corps (2) globalement écartées d'une surface d'appui (S), ce repose-pieds (4) étant alors en contact avec cette surface par au moins une partie bombée et convexe (467) et
- dans une seconde position, le repose-pieds s'étend à distance (d) de la surface d'appui (S), alors que les roues (21) sont en appui sur cette surface.

Le repose-pieds (4) passe d'une position à l'autre par une rotation de 180° autour d'un axe géométrique vertical (Z).

## Description

L'invention a trait à un jouet formant siège à bascule ou pousseur sur roues et à un procédé d'adaptation d'un tel jouet à une fonction de jeu, de type bascule ou roulage.

Un jouet formant siège à bascule ou pousseur sur roues est plus particulièrement destiné aux jeunes enfants en âge d'apprendre à marcher, ces jeunes enfants appréciant généralement de pouvoir chevaucher un jouet, en forme d'animal ou de véhicule, pour se balancer ou pour avancer grâce à un ensemble de roulettes en étant poussé par un adulte ou en s'aidant de leurs pieds. Les jeunes enfants peuvent également pousser le jouet, notamment lorsqu'ils sont en phase d'apprentissage de la marche.

Il est connu de réaliser des jouets qui, au moyen d'accessoires adéquats, peuvent être configurés, soit en siège à bascule, soit en pousseur sur roues. Par exemple US-A-5,022,667 divulgue un jouet dans lequel un chariot réversible peut supporter un siège en position de basculement et en position de roulage. En configuration de basculement, les roues sont dans une position artificielle. Il n'est pas possible pour un enfant de faire rouler le siège seul qui est dépourvu de roues. De plus, le passage de la position de basculement à la position de roulage nécessite une manoeuvre délicate qui peut s'avérer dangereuse, notamment du fait d'un risque de coincement des doigts d'un utilisateur entre des pièces qui pivotent les unes par rapport aux autres.

Dans d'autres jouets, on ajoute ou on supprime une pièce lorsqu'on souhaite passer d'une configuration de basculement à une configuration de roulage. En variante, comme décrit dans US-A-6,161,847, une poignée servant à pousser un jouet en configuration de roulage peut être rabattue sous ce jouet en configuration de bascule. En configuration de roulage, les pieds de l'enfant peuvent traîner sur le sol, y compris lorsqu'il est poussé par un adulte, ce qui peut s'avérer dangereux.

C'est à ces inconvénients qu'entend plus particulièrement remédier l'invention en proposant un jouet pouvant avoir une configuration « à bascule », une configuration « de roulage-poussage », dans laquelle les pieds d'un enfant assis sur le jouet sont maintenus à distance du sol, et une configuration « de roulage autonome » dans laquelle l'enfant pousse avec ses pieds pour faire rouler le jouet. L'invention vise en outre un jouet dont la manipulation est particulièrement aisée pour son passage de l'une à l'autre de ces configurations.

Dans cet esprit, l'invention concerne un jouet formant siège à bascule ou pousseur sur roues qui comprend un corps, formant siège et équipé de roues, et un repose-pieds apte à être monté de façon amovible sur ce corps dans deux positions telles que :
- dans une première position, le repose-pieds maintient les roues du corps globalement écartées d'une surface d'appui, le repose-pieds étant alors en appui sur cette surface par au moins une partie bombée et convexe et
- dans une seconde position, le repose-pieds s'étend à distance de la surface d'appui, les roues du corps étant alors en appui sur la surface précitée-, alors que le repose-pieds est apte à passer de la première à la seconde position, et réciproquement, par une rotation de 180° autour d'un axe globalement perpendiculaire à au moins un axe des roues et à un axe longitudinal du jouet.

Grâce à l'invention, le repose-pieds permet d'isoler sélectivement les roues prévues sur le corps du jouet par rapport à la surface du sol, ce qui permet le basculement du jouet au moyen de la surface bombée. Dans la seconde configuration, le repose-pieds évite que les pieds d'un enfant ne traînent sur le sol, lorsque le jouet est poussé par un adulte et roule sur le sol. Dans les deux configurations de bascule et de roulage-poussage, le repose-pieds est monté sur le corps ce qui évite de l'égarer ou de devoir le stocker à part pendant une période relativement longue. Le passage de la configuration de basculement à la configuration de roulage-poussage a lieu de façon simple en faisant passer le repose-pieds de sa première à sa seconde position, ceci pouvant être effectué de façon réversible. Lorsque l'enfant a grandi, il est possible de retirer le repose-pieds pour atteindre la troisième configuration de roulage autonome dans laquelle l'enfant peut pousser sur le sol avec ses pieds pour se déplacer, à cheval sur le jouet. Si l'on considère un jouet reposant sur une surface sensiblement horizontale, le passage de la première à la seconde position ou le passage de la seconde à la première position a lieu par un retournement du repose-pieds par rapport au corps, autour d'un axe globalement vertical, ce qui représente une manoeuvre aisée.

Des caractéristiques avantageuses de l'invention ressortent des revendications 2 à 9 ci-annexées.

L'invention concerne également un procédé d'adaptation d'un jouet pour enfant à une configuration de jeux de type « bascule » ou « roulage », le roulage étant obtenu au moyen de roues prévues sur un corps du jouet, caractérisé en ce qu'il comprend des étapes consistant à :
- désolidariser un repose-pieds par rapport à ce corps et séparer ces éléments ;
- faire tourner ce repose-pieds, sur 180°, autour d'un axe géométrique globalement perpendiculaire à au moins un axe des roues et un axe longitudinal du jouet
- rapprocher le repose-pieds et le corps et
- fixer à nouveau le repose-pieds sur le corps précité.

L'invention sera mieux comprise et d'autres avantages de celle-ci apparaîtront plus clairement à la lumière de la description qui va suivre d'un mode de réalisation d'un jouet formant siège conforme à l'invention et à un procédé d'utilisation d'un tel jouet, donnée uniquement à titre d'exemple et faite en référence aux dessins annexés dans lesquels :
- la figure 1 est une vue en perspective d'un jouet conforme à l'invention en configuration de basculement ;

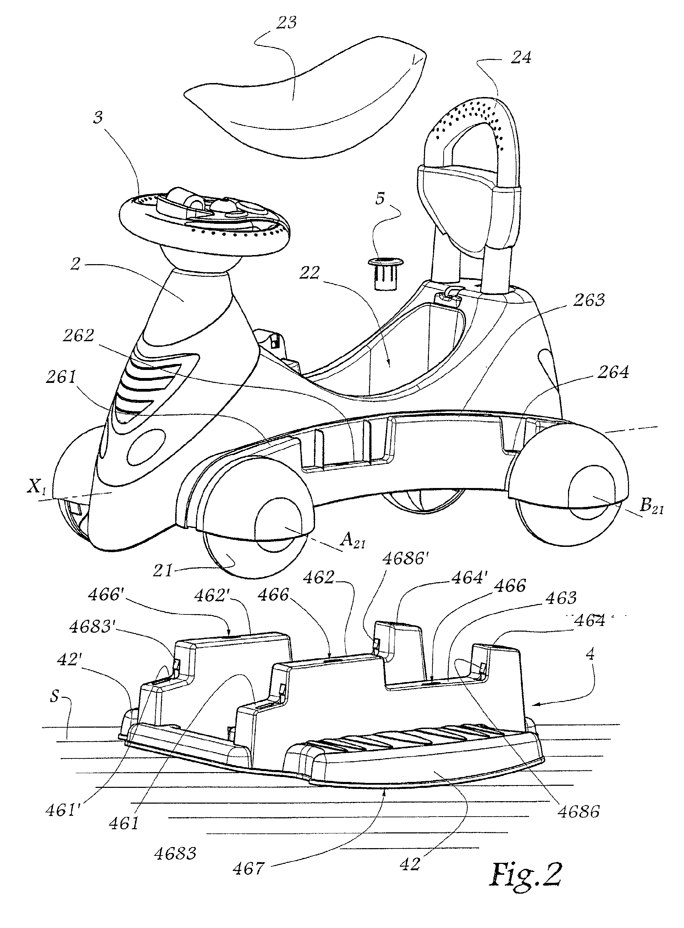

- la figure 2 est une vue en perspective éclatée, à plus grande échelle, du jouet dans une configuration correspondant à la figure 1 ;
- la figure 3 est une vue de côté, avec arrachement d'une jupe latérale, du jouet de la figure 1 ;
- la figure 4 est une vue analogue à la figure 1, alors que le jouet est dans une configuration de roulage-poussage ;
- la figure 5 est une vue analogue à la figure 2 et correspondant à la configuration de la figure 4 ;
- la figure 6 est une vue de côté analogue à la figure 3, lorsque le jouet est dans la configuration de la figure 4 ;
- la figure 6A est une vue à plus grande échelle du détail VI à la figure 6 ;

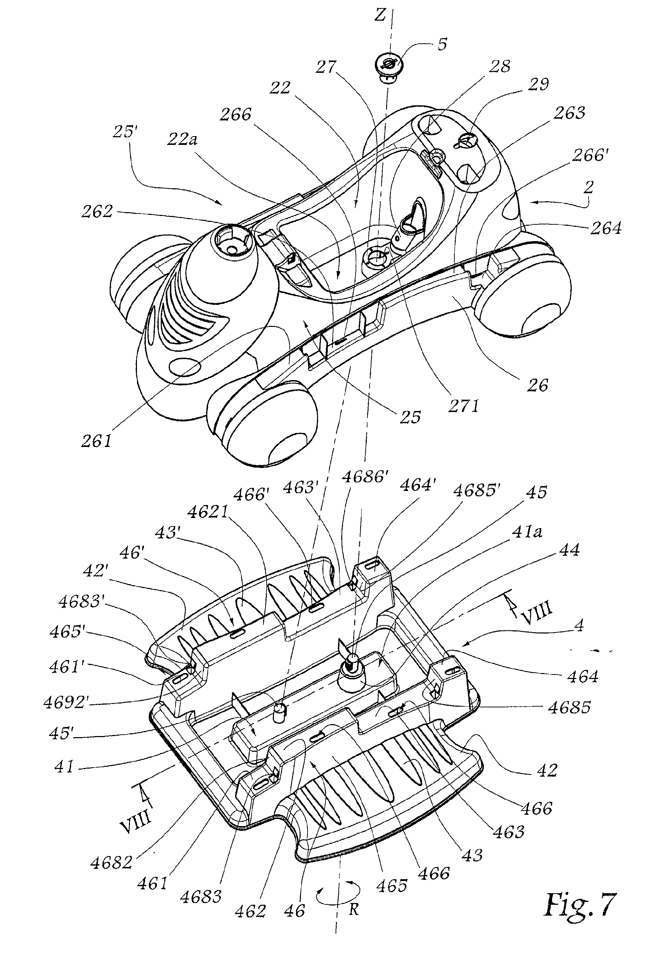

- la figure 7 est une vue partielle, en perspective éclatée, du dispositif des figures 1 à 6, l'angle de perspective étant différent de celui des figures 2 et 5, certains éléments accessoires étant omis ;
- la figure 8 est une coupe selon la ligne VIII-VIII à la figure 7 lors du montage du jouet et
- la figure 9 est vue analogue à la figure 1 lorsque le dispositif est dans une troisième configuration d'utilisation, dite configuration de roulage autonome.

Le jouet 1 représenté sur les figures comprend un corps 2 réalisé en matière plastique moulée tel que du polypropylène. Ce corps est équipé de quatre roues 21 dont on note A₂₁ et B₂₁ les axes géométriques de rotation par rapport au corps 2. Les roues tournant autour de l'axe A₂₁ constituent les roues avant du jouet et sont montées sur une colonne de direction non représentée qui s'étend globalement selon un axe C et qui peut être manoeuvré grâce à un volant 3. Les roues 21 tournant autour de l'axe B₂₁ constituent les roues arrière du jouet.

Le corps 2 forme un coffre 22 obturé par une selle 23 articulée sur le corps 2 autour d'un axe géométrique D₂₃ globalement parallèle à l'axe B₂₁. La selle 23 est également réalisée en matière plastique moulée, par exemple en polypropylène.

Une poignée 24 est montée en partie arrière du corps 2 et constitue un dossier pour un enfant assis sur la selle 23. La poignée 24 permet également à un enfant de pousser le jouet 1.

On note X₁ un axe longitudinal du jouet 1, cet axe étant perpendiculaire à l'axe B₂₁ et aligné avec la direction d'avance du jouet 1 lorsque la colonne de direction est en position médiane, c'est-à-dire lorsque les axes A₂₁ et B₂₁ sont parallèles.

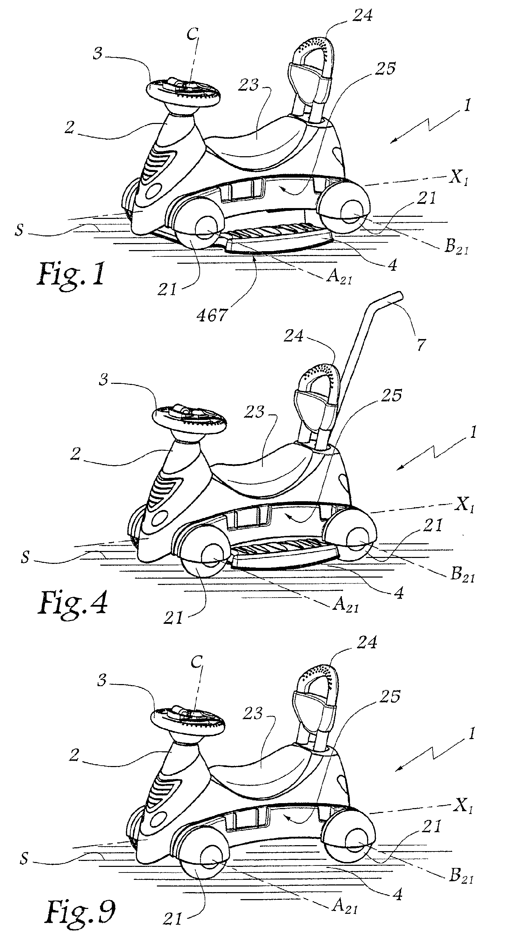

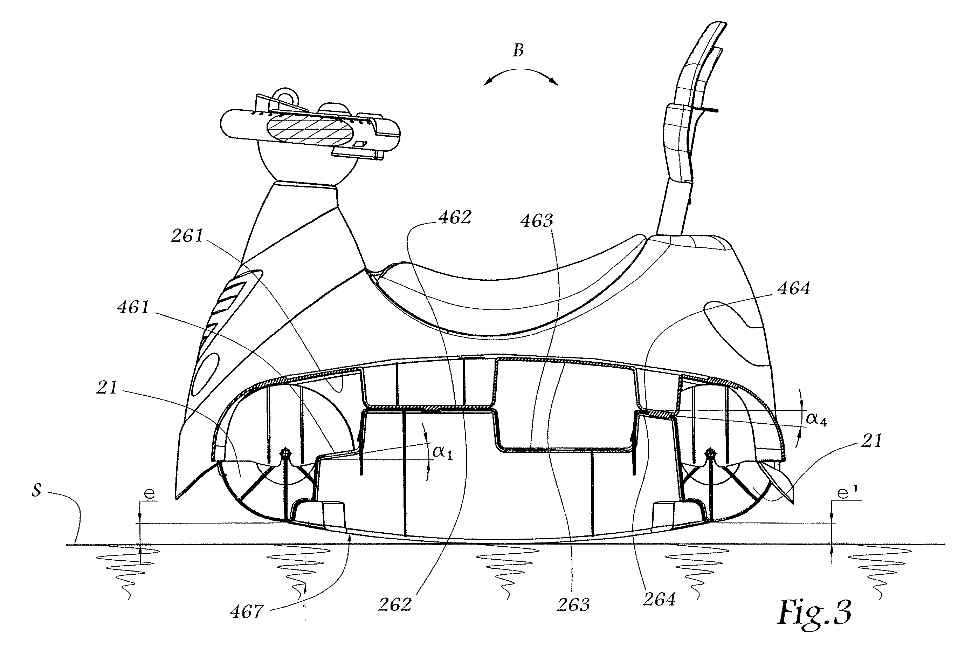

Un repose-pieds 4 est prévu pour être monté en partie basse du corps 2 dans une configuration, représentée aux figures 1 et 3, dans laquelle il repose sur la surface S du sol par une surface 467 bombée et convexe en maintenant les roues 21 à distance de la surface S. Sur les figures, la surface S est horizontale. En l'absence d'effort externe exercé sur le jouet 1, l'écart e entre les roues avant et la surface S est sensiblement égal à l'écart e' entre les roues arrière et cette surface.

Le repose-pieds 4 comprend un socle central 41 et deux ailes latérales 42 et 42', les ailes 42 et 42' faisant saillie vers l'extérieur par rapport aux flancs latéraux 25 et 25' du corps 2, de telle sorte qu'elles constituent des surfaces pouvant recevoir les pieds d'un utilisateur. A cet effet, les ailes 42 et 42' sont pourvues de reliefs 43 et 43' visant à limiter le glissement des pieds d'un utilisateur.

Le socle 41 est pourvu d'un bossage 44 s'étendant sur une hauteur h₄₄ au-dessus de la surface supérieure globalement plane 41a du socle 41.

Le bossage 44 est surmonté d'un pion partiellement fileté 45 dont on note h₄₅ la hauteur par rapport à la surface 41a.

Par ailleurs, le repose-pieds 4 est pourvu d'un second pion fileté 45' s'étendant au-dessus de la surface 41a sur une hauteur h'₄₅ sensiblement plus petite que la hauteur h₄₅ puisque le pion 45' a sensiblement la même longueur que le pion 45, alors qu'aucun bossage du type du bossage 44 n'est intercalé entre ce pion 45' et la surface 41a.

Le repose-pieds 4 est également pourvu de deux cloisons 46 et 46' globalement perpendiculaires aux ailes 42 et 42' et dont les bords supérieurs sont étagés. Plus précisément, la cloison 46 forme un premier palier 461 incliné par rapport à la surface supérieure 41a du socle 41. La cloison 46 forme un second palier 462 globalement parallèle à la surface 41, de même qu'un troisième palier 463 qui s'étend à un niveau inférieur par rapport au palier 462 lorsque le socle 4 repose sur la surface horizontale S. Enfin, un quatrième palier 464 s'étend à un niveau supérieur à celui du palier 463 en étant incliné par rapport à l'horizontale.

On note α₁ l'angle d'inclinaison du palier 461 par rapport à l'horizontale lorsque la surface 41a est horizontale. On note α₄ l'angle correspondant pour le palier 464.

Les angle α₁ et α₄ sont égaux en valeurs absolues mais les paliers 461 et 464 sont inclinés en sens opposé.

De la même façon, la cloison 46' forme quatre paliers 461', 462', 463' et 464' qui sont respectivement parallèles et alignés avec les paliers 461 à 464.

Les flancs 25 et 25' comportent chacun, en partie basse, une jupe 26, respectivement 26', faisant saillie vers l'extérieur par rapport aux flancs 25 et 25'.

La jupe 26 est raccordée au flanc 25 par des retours étagés. Un premier retour 261 est formé à proximité de la roue avant gauche 21, alors qu'un second retour 262 est formé à un niveau inférieur par rapport au retour 261 lorsque le jouet 1 repose sur sa surface S horizontale. Un troisième retour 263 s'étend à un niveau supérieur par rapport au retour 262, alors qu'un quatrième retour 264 s'étend à proximité de la roue arrière gauche 21.

Des retours analogues 261', 262', 263' et 264' sont prévus entre le flanc 25' et la jupe 26' et sont visibles à la figure 3.

Les paliers 261, 264, 261' et 264' sont inclinés avec des angles d'inclinaison β₁ et β₄ respectivement égaux au angles α₁ et α₄.

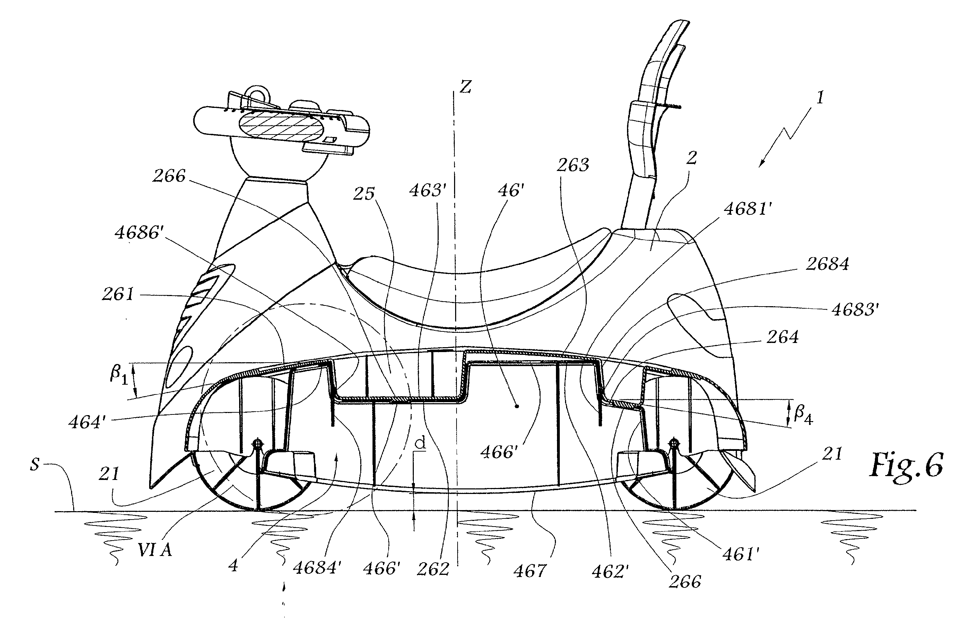

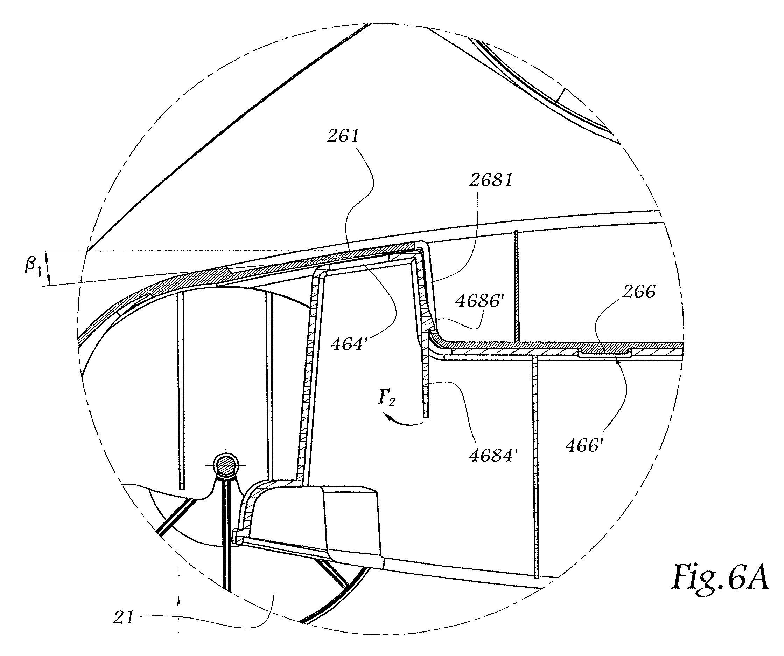

Aux figures 3 et 6, la jupe 26 a été omise pour la clarté du dessin, les retours 261 et 264 demeurant visibles.

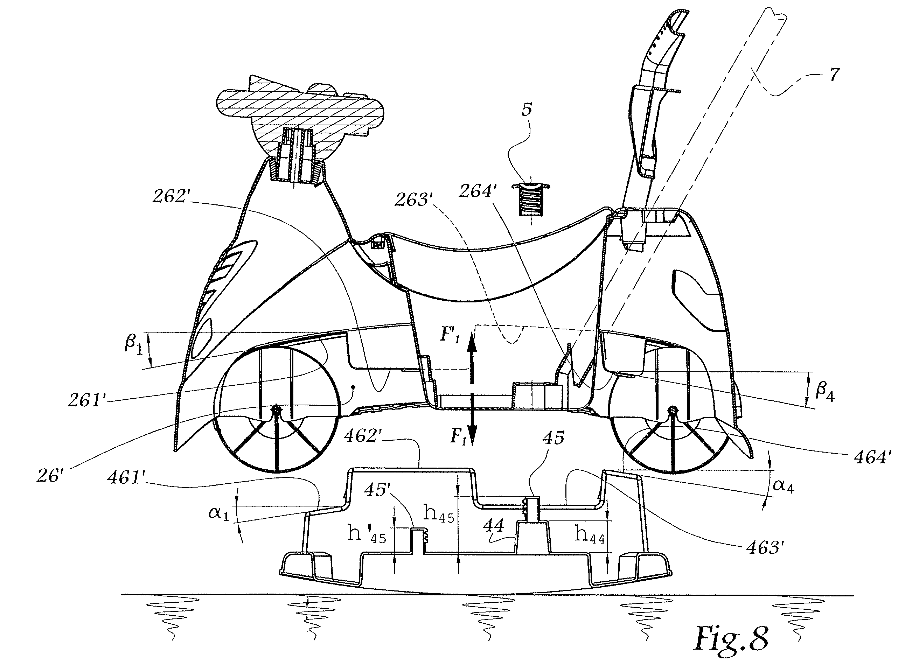

Dans la configuration de bascule représentée aux figures 1 et 3, le repose-pieds 4 est introduit sous le corps 2, de telle sorte que le pion 45 traverse un siège 27 ménagé dans le voile de fond 22a du coffre 22. Il est alors possible de serrer sur le pion 45 un écrou 5 en matière plastique permettant d'immobiliser le pion 45 par rapport au siège 27. La mise en place du repose-pieds 4 par rapport au corps 2 est représentée par la flèche F₁ à la figure 8 où le corps 2 est poussé vers le bas pour coiffer le repose-pieds 4.

Le siège 27 est pourvu de reliefs 271 permettant de freiner le desserrage de l'écrou 5, ce qui contribue à la stabilité de l'assemblage réalisé grâce aux éléments 5 et 45.

Dans la configuration précitée, les paliers 462 à 464 et 462' à 464' viennent respectivement en appui contre les retours 262 à 264 et 262' à 264', les appuis de ces différents paliers les uns contre les autres induisant un maintien efficace du repose-pieds 4 par rapport au corps 2.

On note que, lors du mouvement d'introduction du repose-pieds 4 dans le corps 2, la surface latérale externe 465 de la cloison 46 peut frotter contre la surface interne de la jupe 26. De la même façon, la surface externe 465' de la cloison 46' peut frotter contre la surface interne de la jupe 26'. Ceci permet de guider efficacement le repose-pieds 4 lors de sa progression à l'intérieur du corps 2, telle que représentée par la flèche F₁.

Dans la configuration des figures 1 et 3, les surfaces 262 et 462 sont en appui l'une sur l'autre, de même que les surfaces 264 et 464. Sur le côté opposé les surfaces 262' et 462' d'une part, 264 et 464' d'autre part, sont en appui l'une contre l'autre.

Les surfaces 264 et 464, d'une part, 264' et 464', d'autre part, sont en appui surfacique l'une contre l'autre du fait de l'égalité des angles α₄ et β₄.

Du fait de l'appui des paliers et retours précités les uns contre les autres, le repose-pieds 4 est maintenu dans une position basse par rapport au corps 2. Cette position est choisie de telle sorte que les roues 21 n'interfèrent pas sensiblement avec la surface S du sol, mais que, au contraire, une surface inférieure bombée et convexe 467 du repose-pieds soit en appui contre le sol S, ce qui permet un mouvement de basculement représenté par la flèche B à la figure 3.

Ainsi, les roues 21 sont maintenues écartées de la surface S et ne peuvent par venir toutes à la fois en contact avec celle-ci.

La géométrie de la surface 467 et l'emplacement des roues 21 sur le corps 2 sont choisis de telle sorte que la partie inférieure des roues prolonge globalement la surface 467. En cours de basculement, les roues peuvent venir alternativement au contact de la surface S, les écarts e et e' étant rendus nuls sous l'effet des efforts exercés par l'enfant.

Des reliefs en saillie 266 sont prévus sur les retours 262 et 264 de la jupe 26, alors que des reliefs analogues 266' sont prévus sur les retours 262' et 264' de la jupe 26'. Ces reliefs sont prévus pour être engagés dans des ouvertures 466 et 466', respectivement ménagées dans les paliers formés en partie supérieure des cloisons 46 et 46'. Plus précisément, les reliefs 266 sont engagés dans les ouvertures 466 des paliers 462 et 464, alors que les reliefs 266' sont engagées dans les ouvertures 466' des paliers 462' et 464'. La coopération des reliefs 266 et 266' avec les ouvertures 466 et 466' permet un centrage des paliers et retours venant en appui mutuel dans la configuration de la figure 3.

Une languette élastiquement déformable 4681 s'étend vers le bas à partir d'une surface 4682 de transition entre les paliers 461 et 462. La languette 4681 est pourvue d'un bec 4683 orienté vers le palier 461.

De la même façon, une languette élastiquement déformable 4684 prolonge vers le bas la surface 4685 de transition entre les paliers 463 et 464, cette languette étant pourvue d'un bec 4686 orienté vers le palier 463.

Des languettes analogues 4681' et 4684' sont prévues au niveau de la cloison 46' et l'on note 4683' et 4686' les becs formés respectivement sur ces languettes qui font saillie respectivement à partir de surfaces de transition 4682' et 4685' correspondant aux surfaces 4682 et 4685.

Dans la configuration des figures 1 et 3, les becs 4683 et équivalents n'interagissent pas avec le corps 2.

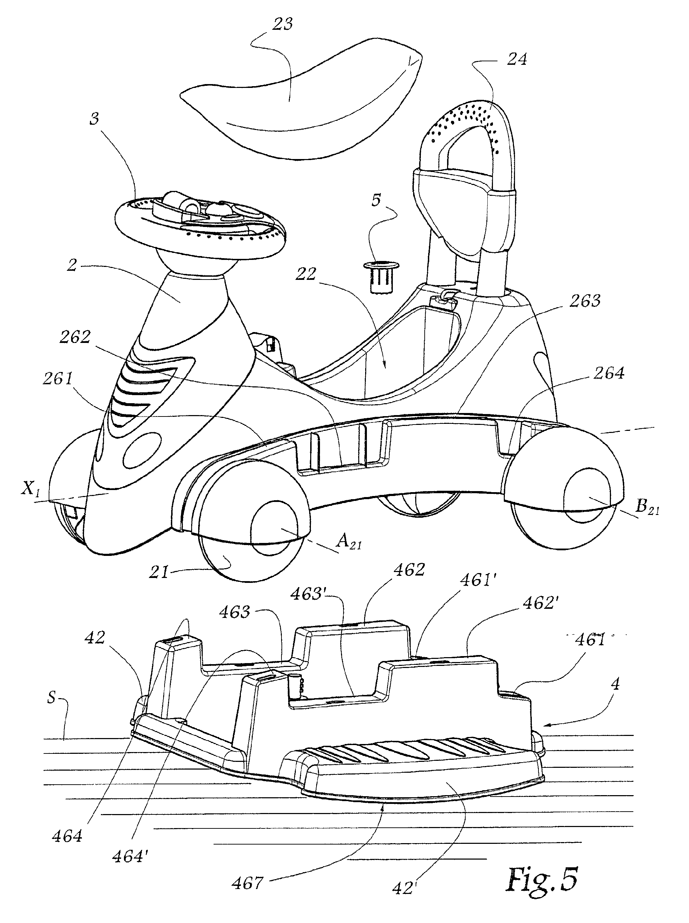

Lorsqu'un adulte souhaite pousser le jouet 1, une canne 7 peut être montée sur le corps 2 en étant engagée dans un gousset 28 prévu à proximité du siège 27. Cette canne 7 est représentée à la figure 4 et en traits mixtes à la figure 8. La canne 7 traverse un orifice de guidage 29 prévu en partie arrière supérieure du corps 2 et s'étend en pratique jusqu'à proximité immédiate de la surface 41a du repose-pieds 4. La trace de cette canne est représentée par le trait d'axe 7 à la figure 8.

Lorsqu'on souhaite utiliser le jouet 1 en pousseur sur roues au moyen de la canne 7 ou en poussant la poignée 24 sans que l'enfant ait les pieds qui traînent sur le sol, il suffit de desserrer l'écrou 5 et de soulever le corps 2 par rapport au repose-pieds 4 dans le sens de la flèche F'₁ à la figure 8, c'est-à-dire en sens inverse de la flèche F₁. Il est également possible pousser vers le bas le repose-pieds 4 en tenant en l'air le corps 2.

Il est alors possible de faire subir au repose-pieds 4 une rotation R de 180° autour d'un axe Z, globalement vertical et perpendiculaire aux axes X₁ et B₂₁, ce qui permet d'amener l'aile 42 au niveau du flanc 25' et l'aile 42' au niveau du flanc 25. Dans cette configuration représentée à la figure 5, le palier 461 est en regard du retour 264', les paliers 462, 463 et 464 étant respectivement en regard des retours 263', 262' et 261'. De la même façon, les paliers 461', 462', 463' et 464' viennent respectivement en regard des paliers 264, 263, 262 et 261.

Il est alors possible de pousser à nouveau le repose-pieds 4 vers l'intérieur du corps 2 ou de faire descendre le corps 2 vers le repose-pieds 4, au point d'insérer le pion 45' dans le siège 27.

Les reliefs 266 et 266' pénètrent alors respectivement dans les ouvertures 466' et 466 ménagées dans les paliers 461' et 463', d'une part, 461 et 463, d'autre part, ce qui contribue au centrage des éléments 2 et 4 l'un par rapport à l'autre.

On peut alors serrer l'écrou 5 sur le pion 45' engagé dans le siège 27. Dans cette configuration, les paliers et retours précités viennent en appui les uns contre les autres et, compte tenu de la géométrie des cloisons 46 et 46' et des jupes 26 et 26', le repose-pieds 4 monte sensiblement plus à l'intérieur du corps 2, au point qu'il est à distance d de la surface S, alors que les roues 21 reposent sur cette surface.

En outre, et comme il ressort plus particulièrement de la figure 6A, le bec 4686' associé à la languette 4684' vient en engagement dans une ouverture 2681 ménagée dans la surface de transition 2682 entre les paliers 261 et 262.

De la même façon, le bec 4683' pénètre dans une ouverture 2684 ménagée dans une surface de transition 2685 entre les retours 263 et 264.

Il en est de même du côté de la jupe 26' où les becs 4683 et 4686 viennent en engagement dans des ouvertures prévues respectivement dans les surfaces de transition entre les retours 263' et 264', d'une part, 261' et 262' d'autre part.

Les surfaces 465 et 465' peuvent glisser le long des surfaces internes des jupes 26 et 26' afin de guider la progression du repose-pieds 4 à l'intérieur du corps 2.

On note que, dans la configuration des figures 4 et 6, le palier 462 n'est pas réellement en appui contre le retour 263', ce qui n'est pas en soi gênant car un appui surfacique entre le repose-pieds 4 et le corps 2 a lieu au niveau des paliers 461, 463 et 464. Il en est de même du côté de la jupe 26.

Lorsqu'on souhaite démonter à nouveau le repose-pieds 4 par rapport au corps 2, il suffit de desserrer à nouveau l'écrou 5 et d'exercer sur les languettes 4681, 4681', 4684 et 4684' un effort de dégagement des becs qu'elles portent par rapport aux ouvertures dans lesquelles ces becs sont engagés. Cet effort est représenté uniquement à la figure 6A et repéré par le flèche F₂.

Lorsque l'enfant a grandi et souhaite se servir du jouet 1 en le chevauchant et en le faisant avancer avec ses pieds, il est possible de retirer le repose-pieds 4. On obtient alors la configuration de la figure 9 où le jouet 1 est aisément manoeuvrable pour un enfant assis sur la selle 23.

Des capots non représentés peuvent être prévus sur le corps 2 pour masquer les parties situées au-dessus des retours 262, 264, 262' et 264' et améliorer ainsi l'esthétique globale du jouet.

L'invention a été représentée avec un jouet 1 globalement en forme de motocyclette. Elle est bien entendu utilisable indépendamment de l'aspect esthétique du jouet 1 qui peut, par exemple, avoir la forme d'un animal.

L'invention a été représentée avec les reliefs 266 et 266' sur le corps 2, alors que les ouvertures correspondantes sont prévues dans le socle 4. Une structure inverse peut être envisagée, dans laquelle les reliefs sont formés sur le repose-pieds 4, alors que des ouvertures correspondantes sont prévues dans le corps 2. De même, des becs du type des becs 4683 et équivalents pourraient être prévus sur le corps 2, alors que des ouvertures correspondantes seraient prévues sur le repose-pieds 4.

## Revendications

1. Jouet formant siège à bascule ou pousseur sur roues, comprenant un corps (2) formant siège (23) et équipé de roues (21), **caractérisé en ce qu'**il comprend un repose-pieds (4) apte à être monté de façon amovible sous ledit corps dans deux positions telles que :
- dans une première position, ledit repose-pieds maintient lesdites roues (21) globalement écartées (e, e') d'une surface d'appui (S), ledit repose-pieds étant alors en appui sur ladite surface par au moins une partie (467) bombée et convexe et
- dans une seconde position, ledit repose-pieds s'étend à distance (d) de ladite surface d'appui, lesdites roues étant alors en appui sur ladite surface,
alors que ledit repose-pieds (4) est apte à passer de ladite première à ladite seconde position, et réciproquement, par une rotation de 180° autour d'un axe (Z) globalement perpendiculaire à au moins un axe (A₂₁, B₂₁) desdites roues (21) et à un axe longitudinal (X₁) dudit jouet (1).

2. Jouet selon la revendication 1, **caractérisé en ce qu'**il comprend des moyens (5, 6, 45, 45', 2681, 2684, 4681, 4681',4684, 4684') d'immobilisation dudit repose-pieds (4) sur ledit corps (2) dans chacune desdites deux positions.

3. Jouet selon la revendication 2, **caractérisé en ce que** lesdits moyens d'immobilisation comprennent un écrou (5) apte à coopérer, alternativement, avec deux pions filetés (45, 45') prévus sur ledit repose-pieds (4).

4. Jouet selon la revendication 3, **caractérisé en ce que** lesdits pions (45, 45') s'élèvent à des hauteurs (h₄₅, h'₄₅) différentes par rapport à un socle central (41) dudit repose-pieds (4) .

5. Jouet selon l'une des revendications 2 à 4, **caractérisé en ce que** lesdits moyens d'immobilisation comprennent au moins un élément d'accrochage (4681, 4681', 4684, 4684') élastiquement déformable, prévu sur l'un (2) des éléments constitués dudit corps (2) et dudit repose-pieds (4), et apte à coopérer avec une partie (2681, 2684) correspondante prévue sur l'autre élément (4).

6. Jouet selon l'une des revendications précédentes, **caractérisé en ce que** l'un (2) au moins des éléments constitués dudit corps (2) et dudit repose-pieds (4) porte au moins un relief (266, 266') de centrage apte à pénétrer dans une ouverture (466, 466') de forme correspondante ménagée sur l'autre élément (4).

7. Jouet selon l'une des revendications précédentes, **caractérisé en ce que** ledit repose-pieds (4) est pourvu de surfaces de butée (461-464, 461'-464') étagées aptes à venir alternativement, dans chacune desdites positions, en appui contre des surfaces correspondantes (261-264, 26l'-264') prévues sur ledit corps (2).

8. Jouet selon la revendication 8, **caractérisé en ce que** lesdites surfaces prévues sur ledit corps (2) sont formées par des retours (261-264, 261'-264') s'étendant vers le centre dudit corps à partir de jupes latérales (26, 26').

9. Jouet selon l'une des revendications 7 ou 8, **caractérisé en ce que** certaines surfaces de butée (461, 464, 461', 464') sont inclinées par rapport à l'horizontale, lorsque un socle central (41) dudit repose-pieds est horizontal, d'un angle (α₁, α₄) de même valeur que l'angle (β₁, β₄) d'inclinaison des surfaces correspondantes (261, 264, 261', 164') prévues sur ledit corps (2).

10. Procédé d'adaptation d'un jouet pour enfant à une configuration de jeu de type « bascule » ou « roulage-poussage », le roulage étant obtenu au moyen de roues prévues sur un corps du jouet, **caractérisé en ce qu'**il comprend des étapes consistant à :
- désolidariser un repose-pieds (4) par rapport audit corps (2) et séparer (F'₁) ledit repose-pieds et ledit corps
- faire tourner (R) ledit repose-pieds de 180° autour d'un axe géométrique (Z) globalement perpendiculaire à au moins un axe (A₂₁, B₂₁) desdites roues (21) et à un axe longitudinal (X₁) dudit jouet (1)
- rapprocher (F₁) ledit repose-pieds et ledit corps et
- fixer à nouveau (5, 6) ledit repose-pieds sur ledit corps.
